# NEW EUROPEAN PATENT SPECIFICATION

(11) **EP 1 038 903 B2**
(45) Date of publication and mention of the opposition decision: **16.12.2009**
(45) Mention of the grant of the patent: 27.09.2006
(21) Application number: 99937034.9
(22) Date of filing: 11.08.1999
(51) Int. Cl.: C08J 3/12, C08L 29/04, C08L 33/00, C08F 2/44, C08F 6/14

(54) **REDISPERSIBLE EMULSION POWDER AND PROCESS FOR PRODUCING THE SAME**
REDISPERGIERBARE EMULSIONSPULVER UND VERFAHREN ZU IHRER HERSTELLUNG
POUDRE POUR EMULSION POUVANT ETRE REMISE EN SUSPENSION ET PROCEDE DE FABRICATION CORRESPONDANT

(30) Priority: 11.08.1998 JP 22723898
(43) Date of publication of application: 27.09.2000
(73) Proprietor: Akzo Nobel N.V., 6824 BM Arnhem (NL)
(72) Inventor: SUGAYA, Mamoru Shizuoka T.C. Clariant Pol. K.K., Ogasa-gun Sizuoka 437-1412 (JP); KATSUKI, Masami Shizuoka T. C. Clariant Pol. K.K., Ogasa-gun Sizuoka 437-1412 (JP); UEHORI, Souichi Shizuoka T. C. Clariant Pol. K.K., Ogasa-gun Sizuoka 437-1412 (JP); OKAYASU, Katsuyuki Shizuoka T.C.Clariant Pol. K.K., Ogasa-gun Sizuoka 437-1412 (JP); IGARASHI, Arata Shizuoka T. C. Clariant Pol. KK, Ogasa-gun Sizuoka 437-1412 (JP)
(74) Representative: van Dam, Eveline Martina Alette
(86) International application number: PCT/JP1999/004356
(87) International publication number: WO 2000/009589

(56) References cited:
- EP-A- 0 633 275
- EP-A- 0 894 821
- JP-A- 4 185 606
- JP-A- 6 100 751
- JP-A- 7 025 652
- JP-A- 7 102 007
- JP-A- 9 241 388
- DATABASE WPI Section Ch, Week 199952 Derwent Publications Ltd., London, GB; Class A14, AN 1999-604951 XP002195128 & JP 11 263849 A (KURARAY CO LTD), 28 September 1999 (1999-09-28)

## Description

### BACKGROUND OF THE INVENTION

### Field of the Invention

The present invention relates to re-dispersible emulsion powder which is obtained by drying emulsion based on vinyl polymer prepared by using modified polyvinyl alcohol as protective colloid and which can conveniently be used for admixtures to pre-mixed cement compound, powdered paints or adhesive agents, and the like. The present invention also relates to a process for producing such emulsion powder.

### Background Art

Re-dispersible synthetic polymer emulsion powder produced by drying synthetic polymer emulsion is advantageous over synthetic polymer emulsion as described below.

Since such re-dispersible emulsion powder is in powder form, they are easy to handle and convenient for transportation. Further, it is possible to re-disperse them in water just before use by simply adding them to water, followed by stirring, so that they can widely be used as adhesive agents, binders for paints, additives for cement products, and the like. In particular, re-dispersible emulsion powder can be mixed with components of cement products beforehand, so that it is possible to obtain final cement products such as mortar or concrete only by adding water to the mixtures in situ. Moreover, by utilizing re-dispersible emulsion powder, it is possible to produce cement whose necessary components have been premixed. Therefore, re-dispersible emulsion powder is helpful in decreasing waste, and can thus contribute to the mitigation of adverse environmental impacts.

Polyvinyl acetate emulsion containing as protective colloid polyvinyl alcohol (hereinafter sometimes referred to as "PVA") have generally been used for producing re-dispersible emulsion powder. However, re-dispersible emulsion powder produced by using PVA as protective colloid is poor in miscibility with ultra rapid hardening cement; and, when such emulsion powder is mixed with ultra rapid hardening cement, the resulting mortar may show increased viscosity and decreased flowability.

It is possible to produce vinyl plymer emulsion by polymerization using, as an emulsifying agent, a surface-active agent without the use of PVA. However, emulsion powder that is obtained by drying vinyl polymer emulsion of this type has such a problem that it shows substantially no re-dispersibility in water.

For this reason, there have been demanded those emulsion powder which can be obtained by drying vinyl polymer emulsion produced by using polyvinyl alcohol substances as protective colloid and which are excellent in both miscibility and re-dispersibility in water.

### SUMMARY OF THE INVENTION

We found that it is possible to obtain re-dispersible emulsion powder excellent in both miscibility and re-dispersibility by using synthetic polymer emulsion powder produced by the use of, as polyvinyl alcohol, anion-modified polyvinyl alcohol having an anionic group. The present invention was accomplished on the basis of this finding.

An object of the present invention is therefore to provide re-dispersible emulsion powder which can conveniently be used for admixtures to pre-mixed cement compound, powdered paints or adhesive agents, and the like, which is particularly excellent in miscibility with inorganic fillers or polyvalent inorganic salts that are used for engineering works or building materials, in re-dispersibility and in working properties and which is suitable as an admixture for ultra rapid hardening cement. Another object of the present invention is to provide a process for producing such re-dispersible emulsion powder.

Re-dispersible emulsion powder according to the present invention comprises vinyl copolymer particles containing anion-modified polyvinyl alcohol adsorbed by their surfaces.

Re-dispersible emulsion powder according to the present invention can stably be mixed with pigments or inorganic fillers, and is_excellent in re-dispersibility.

Further, the re-dispersible emulsion powder according to the present invention shows re-dispersibility comparable to that of conventional general-purpose emulsion powder made from polyvinyl acetate emulsion prepared by using PVA as protective colloid. The re-dispersible emulsion powder of the invention is thus excellent in such physical properties as re-dispersibility, water resistance, alkali resistance and film-forming properties. In addition, it shows excellent workability when applied to inorganic products useful for engineering works or construction materials. The re-dispersible emulsion powder of the present invention can thus be used conveniently as a admixture to pre-mixed cement compound or a cement modifier, or for powdered paints or adhesive agents, etc.

A process for producing re-dispersible emulsion powder according to the present invention comprises emulsion-polymerizing a vinyl monomer composition in an aqueous medium in the presence of anion-modified polyvinyl alcohol, and subjecting the resulting aqueous emulsion to drying.

By this process of the invention, it is possible to produce re-dispersible emulsion powder of the present invention at extremely high efficiency.

### DETAILED DESCRIPTION OF THE INVENTION

### Re-dispersible Emulsion powder

Re-dispersible emulsion powder according to the present invention comprises vinyl copolymer particles containing anion-modified polyvinyl alcohol adsorbed by their surfaces. In the present invention, the term "re-dispersible emulsion powder" means powder that can give emulsion when re-dispersed in aqueous medium (e.g., water).

In one preferred embodiment of the present invention, the re-dispersible emulsion powder is obtained by emulsion-polymerizing a vinyl monomer composition in an aqueous medium in the presence of anion-modified polyvinyl alcohol, and subjecting the resulting aqueous emulsion to drying.

### Anion-Modified Polyvinyl Alcohol

By the anion-modified polyvinyl alcohol (hereinafter sometimes referred to as "anion-modified PVA") is herein meant polyvinyl alcohol modified by an anionic group that is introduced by a conventional means, whereby anionic groups include sulfonic acid group and carboxylic acid group (carboxyl group).

Further, such anion-modified polyvinyl alcohol may be either properly synthesized one or commercially available one. In the present invention, anion-modified polyvinyl alcohol are sulfonic acid-modified polyvinyl alcohol (hereinafter sometimes referred to as "sulfonic acid-modified PVA"), carboxylic acid-modified polyvinyl alcohol (hereinafter sometimes referred to as "carboxylic acid-modified PVA"), and mixtures thereof. It is essential to use sulfonic or carboxylic acid group for modification because these groups can impart, to the resulting re-dispersible emulsion powder, excellent miscibility with ultra rapid hardening cement.

The degree of saponification of the anion-modified polyvinyl alcohol is preferably 80 mol% or more, more preferably from 85 to 99.5 mol%. When the degree of saponification is 80 mol% or more, the polymerization proceeds more stably, and the aqueous emulsion obtained after the polymerization shows high preservation stability. When the degree of saponification is 99.5 mol% or less, the resulting emulsion powder can readily be re-dispersed.

The degree of polymerization of the anion-modified polyvinyl alcohol is generally from 50 to 2,000, preferably from 200 to 500. When the polymerization degree is 50 or more, the anion-modified polyvinyl alcohol fully shows its protective action during the emulsion polymerization, so that the polymerization proceeds more stably. When the degree of polymerization is 2,000 or less, the reaction system scarcely undergoes increase in viscosity and thus remains stale in the course of the polymerization, so that the emulsion powder finally obtained shows improved re-dispersibility.

The rate of modification of the anion-modified polyvinyl alcohol is generally from 2 to 10 mol%, preferably from 3 to 6 mol%. When the rate of modification is 2 mol% or more, the resulting re-dispersible emulsion powder readily shows its functions as a polymeric dispersing agent when mixed with inorganic fillers or cements, especially with ultra rapid hardening cement. When the rate of modification is 10 mol% or less, the reaction system remains stable throughout the emulsion polymerization.

The amount of the anion-modified polyvinyl alcohol to be used is preferably from 2 to 20% by weight, more preferably from 4 to 10% by weight of the whole quantity of the vinyl monomer composition. When the amount of the anion-modified polyvinyl alcohol used is 20% by weight or less, the resulting re-dispersible emulsion powder shows high water resistance. When this amount is 2% by weight or more, the polymerization proceeds stably.

Therefore, when the anion-modified polyvinyl alcohol is used in an amount of 2 to 20% by weight of the whole quantity of the vinyl monomer composition, the emulsion polymerization proceeds stably to give a highly stable aqueous emulsion; and by the use of this aqueous emulsion, it is possible to produce re-dispersible emulsion powder excellent in re-dispersibility.

In a preferred embodiment of the present invention, the re-dispersible emulsion powder is obtained by using the anion-modified polyvinyl alcohol in an amount of 2 to 20% by weight of the whole quantity of the vinyl monomer composition.

### Vinyl Monomer Composition

The vinyl monomer composition comprises at least a vinyl monomer, and optionally other components that are selected properly.

Any vinyl monomer can be used as long as it is a radically polymerizable unsaturated monomer, and a purposive monomer properly selected may be used. Examples of such vinyl monomers include vinyl acetate, vinyl esters of saturated carboxylic acids branched at the α-position, vinyl esters such as vinyl propionate, ethylenically unsaturated carboxylic acids such as acrylic acid, methacrylic acid, crotonic acid and maleic acid, ethylene, vinyl chloride, vinylidene chloride, aromatic vinyl compounds such as styrene and methyl styrene, vinyl phosphate, acrylonitrile, (meth)acrylamide and (meth)acrylic alkyl esters. These monomers can be used either singly or in combination of two or more members.

Of these vinyl monomers, acrylic monomers are preferred when the physical properties (e.g., water resistance, alkali resistance, etc.) of the resulting re-dispersible emulsion powder are taken into prime consideration. When an acrylic monomer is used as the vinyl monomer, the resulting re-dispersible emulsion powder shows excellent water resistance and alkali resistance.

Preferred acrylic monomers are those containing not less than 50% by weight of (meth)acrylic alkyl esters; and (meth)acrylic alkyl esters whose alkyl group contains 1 to 12 carbon atoms, for instance, are preferred. Specific examples of such acrylic monomers include ethyl acrylate, ethyl methacrylate, methyl acrylate, methyl methacrylate, propyl acrylate, propyl methacrylate, butyl acrylate, butyl methacrylate, 2-ethylhexyl acrylate, 2-ethylhexyl methacrylate, cyclohexyl methacrylate, cyclohexyl acrylate, and alkoxyethyl acrylate.

The vinyl monomer composition may optionally contain components other than the above-described vinyl monomer (other components). Examples of such components include monomers copolymerizable with vinyl monomers, water-soluble oligomers, polymerization initiators, polymerization regulators, and emulsifiers.

Monomers copolymerizable with vinyl monomers (hereinafter sometimes referred to as "copolymerizable monomers") may also be used in the present invention. Examples of such copolymerizable monomers include crosslinking monomers.

Examples of crosslinking monomers include monomers having functional groups. Examples of monomers having functional groups include alkoxysilyl-group-containing monomers, glycidyl-group-containing monomers, methylol-group-containing monomers, nitrile-group-containing monomers, amide-group-containing monomers, and monomers having two or more polymerizable unsaturated groups. Of these, monomers having two or more polymerizable unsaturated groups, which easily form internally crosslinked structure, are preferred in the present invention.

Examples of monomers having two or more polymerizable unsaturated groups include divinyl compounds, di(meth)acrylate compounds, tri(meth)acrylate compounds, tetra(meth)acrylate compounds, diallyl compounds, triallyl compounds and tetraallyl compounds; specifically divinylbenzene, divinyl adipate, ethylene glycol di(meth)acrylate, diethylene glycol di(meth)acrylate, triethylene glycol di(meth)acrylate, polyethylene glycol di(meth)acrylate, polypropylene glycol di(meth)acrylate, neopentyl glycol di(meth)acrylate, 1,3-butylene glycol di(meth)acrylate, 1,3-butyl di(meth)acrylate, trimethylolethane tri(meth)acrylate, trimethylolpropane tri(meth)acrylate, dipentaerythritol tri(meth)acrylate, diallyl phthalate, triallyl dicyanurate, tetraallyl oxyethane, and triallyl isocyanurate. These monomers can be used either singly or in combination of two or more members.

In the case where a crosslinking monomer is used, the amount of the monomer to be used is generally from 0.1 to 5% by weight, preferably from 1 to 3 % by weight. When the amount of the monomer is 0.1% by weight or more, crosslinking properties can sufficiently be obtained; and, when this amount is 5% by weight or less, the reaction system has increased stability, and is thus prevented from being gelled.

Water-soluble oligomers have the property of being dissolved in water to give homogeneous aqueous solutions. In general, it is desirable to avoid using oligomers that merely disperse or swell when placed in water. However, when an acrylic monomer is used as the vinyl monomer, it is sometimes desirable to use such an oligomer. There may be a case where the emulsion polymerization reaction of an acrylic monomer does not proceed efficiently when only the anion-modified polyvinyl alcohol is used as protective colloid. For this reason, and also to obtain good mixing stability at the time when the resulting re-dispersible emulsion powder is re-dispersed together with various additives for use in cement admixtures, powdered paints, and the like, a water-soluble oligomer is used along with the anion-modified polyvinyl alcohol. The amount of the water-soluble oligomer to be used together with the anion-modified polyvinyl alcohol is approximately 50 to 200% by weight, preferably 80 to 120% by weight of the anion-modified polyvinyl alcohol.

Preferred examples of useful water-soluble oligomers include polymers or copolymers having polymerization degrees of approximately 10 to 500, containing a hydrophilic group such as sulfonic acid, carboxyl, hydroxyl or alkylene glycol group. Specific examples of such water-soluble oligomers include amide copolymers such as 2-methacrylamide - 2-methylpropanesulfonic acid copolymer, sodium methacrylate - 4-styrene sulfonate copolymer, styrene - maleic acid copolymer, sulfonated melamine - formaldehyde condensate, polyvinyl pyrrolidone, and poly(meth)acrylic acid salts. In addition, there can also be mentioned those water-soluble oligomers which are obtained by homopolymerizing monomers having sulfonic acid, carboxyl, hydroxyl or alkylene glycol group, or radically polymerizable reactive emulsifiers, or by copolymerizing these monomers or emulsifiers with other monomers.

Of these, 2-methacrylamide - 2-methylpropanesulfonic acid copolymer, and sodium methacrylate - 4-styrenesulfonate copolymer are preferred in the present invention when the effect of imparting re-emulsifiability and that of imparting pigment-dispersing ability are taken into consideration.

Water-soluble oligomers produced before the initiation of the emulsion polymerization, or those sold on the market can be used in the present invention. Further, they can be used either singly or in combination.

Any polymerization initiator may be used as long as it can be used for conventional emulsion polymerization. Examples of useful polymerization initiators include inorganic peroxides such as potassium persulfate, sodium persulfate and ammonium persulfate, organic peroxides, azo initiators, peroxides such as hydrogen peroxide and butyl peroxide, and redox polymerization initiators that are combinations of the above-enumerated compounds and reducing agents. These polymerization initiators can be used either singly or in combination of two or more members. In the present invention, ammonium persulfate is preferred because it does not adversely affect the film-forming properties of the re-dispersible emulsion powder finally obtained or the reinforcement of the film to be formed, and makes the polymerization proceed without difficulty.

It is possible to use any polymerization regulator properly selected from known ones. Examples of useful polymerization regulators include chain transfer agents and buffers.

Examples of useful chain transfer agents include alcohols such as methanol, ethanol, propanol and butanol, carboxylic acids having 2 to 8 carbon atoms such as acetone, methyl ethyl ketone, cyclohexane, acetophenone, acetaldehyde, propionaldehyde, n-butylaldehyde, furfural and benzaldehyde, and mercaptans such as dodecyl mercaptan, lauryl mercaptan, normal mercaptan, thioglycolic acid, octyl thioglycolate and thioglycerol. These chain transfer agents may be used either singly or in combination of two or more members.

Examples of buffers useful herein include sodium acetate, ammonium acetate and dibasic sodium phosphate. These buffers may be used either singly or in combination of two or more members.

There can be used any emulsifying agent properly selected from known anionic, cationic or nonionic ones. Preferred examples of anionic emulsifiers include sodium lauryl sulfate; and preferred examples of nonionic emulsifiers include those ones having Pluronic-type structure or polyoxyethylene structure.

In the case where polymerization initiators, polymerization regulators and emulsifiers are used, each of them can be used in any amount as long as the attainment of the purposes of the present invention is not disturbed; the amounts of these components may properly be selected so that the desired effects can be obtained.

### Process for Producing Re-dispersible Emulsion powder

A process for producing re-dispersible emulsion powder according to the present invention comprises, as mentioned previously, emulsion-polymerizing a vinyl monomer composition in an aqueous medium in the presence of anion-modified polyvinyl alcohol, and subjecting the resulting aqueous emulsion to drying.

In this process of the present invention, the anion-modified polyvinyl alcohol also serves as protective colloid during the emulsion polymerization. It is therefore considered that it is possible to make the emulsion polymerization reaction proceed in the absence of any surface-active agent to give an aqueous emulsion; and re-dispersible emulsion powder of the present invention can be obtained by drying up this aqueous emulsion obtained.

### <Emulsion Polymerization>

The emulsion polymerization can be carried out in any manner; and any purposive polymerization method properly selected from batch emulsion polymerization, monomer-dropping emulsion polymerization, pre-emulsified-monomer-dropping emulsion polymerization, and the like may be adopted.

There is no particular limitation on the polymerization conditions; and they can properly be selected depending on the type and aim of the components to be copolymerized, etc.

The emulsion polymerization can be conducted in the following manner, for instance. Namely, after adding an aqueous solution of anion-modified polyvinyl alcohol to a known reactor such as a polymerization tank, a vinyl monomer composition is placed in the reactor together with a desired amount of an aqueous medium (e.g., water); and then the temperature of the reactor is raised, and a polymerization initiator is added to initiate polymerization reaction. In the case where not whole quantity of the vinyl monomer composition has been placed in the reactor for the first charging, it is possible to continue the emulsion polymerization reaction by adding drop-wise the remaining vinyl monomer composition to the reaction system.

In the emulsion polymerization reaction, the anion-modified polyvinyl alcohol serves as protective colloid. It is therefore considered that the polymerization reaction proceeds even in the absence of any surface-active agent.

Further, in the emulsion polymerization in the present invention, it is preferable to conduct the polymerization by using a water-soluble oligomer together with the anion-modified polyvinyl alcohol. By using the anion-modified polyvinyl alcohol and a water-soluble oligomer in combination, it is possible to efficiently carry out the emulsion polymerization of a vinyl monomer, especially an acrylic monomer.

In the present invention, additives such as pH adjustors, plasticizers and anti-foaming agents, properly selected from known ones can be added to the resultant emulsion after the emulsion polymerization.

A homogeneous aqueous emulsion, milky white in color, is thus obtained by the aforementioned emulsion polymerization.

### <Drying of Aqueous Emulsion>

Next, this aqueous emulsion is subjected to drying.

Any purposive method selected properly can be employed to dry up the aqueous emulsion. Examples of useful drying methods include spray drying, freeze drying, and warm-air drying that is conducted after the step of coagulation. Of these, spray drying is preferred from the viewpoints of production cost, energy saving and re-emulsifiability.

In the case of spray drying, any type of spraying method such as disc- or nozzle-type spraying method can be used. Further, hot air or heating steam, for example, can be used as heat source for the spray drying. The conditions under which the spray drying is conducted may properly be selected depending upon the size and type of the spray drier to be used, and the concentration, viscosity and flow rate of the emulsion to be dried. However, the spray drying temperature is approximately 80 to 150°C.

The spray drying of the aqueous emulsion is conducted, for example, in the following manner: the proportion of the nonvolatile components of the aqueous emulsion is firstly adjusted; this emulsion is continuously fed to a dryer and sprayed from the nozzle of the dryer; and warm air is blown on the sprayed emulsion for powdering.

In the present invention, a known inert inorganic or organic powder properly selected from, for instance, calcium carbonate, talc, clay, silicic anhydride, aluminum silicate, white carbon, and alumina white can be used as a blocking agent when the spray drying is conducted. In a preferred embodiment of the present invention, silicic anhydride, aluminum silicate, calcium carbonate, and the like having a mean particle diameter of approximately 0.01 to 0.5 µm are preferred. The amount of such a powder to be used is preferably about 2 to 30% by weight of the resulting re-dispersible emulsion powder.

In the present invention, water-soluble additives may be added to the aqueous emulsion before subjecting it to spray drying so that the resulting re-dispersible emulsion powder can show more improved re-dispersibility in water.

The amount of the water-soluble additives to be used is preferably 5 to 50% by weight of the solid components of the aqueous emulsion before being subjected to spray drying. When the amount of the additives used is 50% by weight or less, re-dispersible emulsion powder having sufficiently high water resistance can be obtained, and, when it is 5% by weight or more, re-dispersibility-improving effect can satisfactorily be obtained.

Examples of useful water-soluble additives include polyvinyl alcohol, hydroxyethyl cellulose, methyl cellulose, starch derivatives, polyvinyl pyrrolidone, polyethylene oxide, water-soluble alkyd resin, water-soluble phenolic resin, water-soluble urea resin, water-soluble melamine resin, water-soluble guanamine resin, water-soluble sulfonated naphthalene resin, water-soluble amino resin, water-soluble polyamide resin, water-soluble acrylic resin, water-soluble polycarboxylic acid resin, water-soluble polyester resin, water-soluble polyurethane resin, water-soluble polyol resin, and water-soluble epoxy resin. These additives may be used either singly or in combination of two or more members.

Re-dispersible emulsion powder of the present invention can thus be produced.

### Cement Admixture and Cement Product

A cement admixture in the present invention comprises the aforementioned re-dispersible emulsion powder. Conventional components for use in cement admixtures can be used as the other components of the cement admixture comprising the re-dispersible emulsion powder of the invention.

In a preferred embodiment of the present invention, the above cement admixture is preferably an admixture for ultra rapid hardening cement.

Further, a cement product in the present invention is produced by the use of the above-described re-dispersible emulsion powder. Conventional materials for use in cement products, that is, raw materials of cements, can be used as the other components of the cement product. Examples of raw materials of cements include inorganic fillers and polyvalent inorganic salts that are used for engineering works or building materials. The cement product herein includes those products represented by mortar and concrete, and a variety of structures or buildings constructed by the use of these products.

Further, the present invention also encompasses a process for producing a cement product, comprising mixing the aforementioned re-dispersible emulsion powder with conventional raw materials of cement, mixing this mixture with an aqueous medium (e.g., water), and subjecting the resulting mixture to hardening.

### EXAMPLES

The present invention will now be explained more specifically by referring to the following Examples. However, the present invention is not limited to or limited by these examples.

### Example 1

### <Step of Polymerization>

In a reactor were placed 25 parts by weight of a 20 wt.% aqueous solution of sulfonic acid-modified polyvinyl alcohol ("Goselan L-3266" manufactured by The Nippon Synthetic Chemical Industry, Co., Ltd., Japan, degree of saponification 86-89 mol%) serving as the anion-modified polyvinyl alcohol, 4 parts by weight of 2-acrylamide-2-methylpropanesulfonic acid, 2 parts by weight of a 0.2 wt.% aqueous solution of iron sulfate, and 110 parts by weight of water. This reactor was charged with 10% by weight of a monomer composition having the following composition and 100% by weight of a catalyst composition having the following composition, and polymerization was carried out at an inner temperature of 75°C for 15 minutes. Thereafter, 90% by weight of the above monomer composition was added drop-wise to the reaction system over a period of 2 hours to further carry out the polymerization reaction.

The polymerization reaction was aged at 75°C for 1 hour for completion. After the polymerization reaction was completed, the pH of the reaction product was adjusted to approximately 8 by using a 10 wt.% aqueous sodium hydroxide solution.

| Monomer Composition | |
|---|---|
| Methyl methacrylate | 50 parts by weight |
| Butyl acrylate | 50 parts by weight |
| Methacrylic acid | 3 parts by weight |

| Catalyst Composition | |
|---|---|
| Ammonium persulfate | 1 part by weight |
| Water | 10 parts by weight |

### <Step of Drying>

By the above-described polymerization reaction, an aqueous emulsion was obtained. This aqueous emulsion was spray-dried under the following conditions, thereby producing re-dispersible emulsion powder having a mean particle diameter of 70 µm.

| Spray Drying Conditions |
|---|
| Type of spraying method: Nozzle type |
| Heat source: Hot air |
| Temperature: 120°C |

It is noted that, when the aqueous emulsion was subjected to spray drying, a silicic anhydride powder was added to the aqueous emulsion in an amount of 5% by weight of the solid components of the aqueous emulsion.

The re-dispersible emulsion powder obtained was subjected to the following Evaluations (1) and (2).

### (1) Evaluation of Re-dispersibility

30 parts by weight of the re-dispersible emulsion powder was added to 100 parts by weight of deionized water, and the mixture was thoroughly stirred by a stirrer to re-disperse the emulsion powder in the deionized water. The dispersion obtained was placed in a glass container, and stored at room temperature. The re-dispersibility of the emulsion powder was evaluated in accordance with the following criteria. The results are shown in Table 2.
O: The dispersion obtained is homogeneous; and the sedimentation of the emulsion powder is scarcely observed.
X: Phase separation occurs in the dispersion obtained; and a transparent liquid phase and a phase of the emulsion powder sedimented are observed.

### (2) Evaluation of Miscibility with Ultra rapid Hardening Cement (Flowability Test Using Ultra rapid Hardening Cement Milk)

Cement milk was prepared by mixing, by a stirrer at 1,000 rpm for 2 minutes, 1,500 parts by weight of regulated set cement, 900 parts by weight of ordinary portland cement, 70 parts by weight of the re-dispersible emulsion powder, 35 parts by weight of a sulfonated melamine high-performance water-reducing agent, 10 parts by weight of a powdered anti-foaming agent, and 1,150 parts by weight of water for mixing.

The flowability of this cement milk was determined by the method (P-funnel method) for testing the flowability of penetrating cement milk for semi-flexible pavement, described in "*Hoso Shiken-ho Binran* (Handbook of Methods for Testing Pavement)" published by Nihon Doro Kyokai, and evaluated in accordance with the criteria described below. The results are shown in Table 2 ("*Hoso Shiken-ho Binran*" is available from Nihon Doro Kyokai, 3-3-1, Kasugmigaseki, Chiyoda-ku, Tokyo, Japan).
O: less than 12 seconds;
X: 12 seconds or more.

### Examples 2 to 6

The procedure of Example 1 was repeated except that the anion-modified polyvinyl alcohol, the emulsifying agent and the monomer composition used in Example 1 were respectively changed as shown in Table 1. The re-dispersible emulsion powder obtained were subjected to the same evaluations as in Example 1. The results are shown in Table 2.

### Comparative Examples 1 and 2

The procedure of Example 1 was repeated by using emulsifiers as shown in Table 1 without using the anion-modified polyvinyl alcohol. The re-dispersible emulsion powder obtained were subjected to the same evaluations as in Example 1. The results are shown in Table 2.

### Table 1

Note that the unit of the numerical values shown in Table 1 is "parts by weight".

Sulfonic acid-modified PVA: "Goselan L-3266" manufactured by The Nippon Synthetic Chemical Industry, Co., Ltd., Japan; degree of saponification 86-89 mol%.

Carboxyl-modified PVA: "Gosenal T-330" manufactured by The Nippon Synthetic Chemical Industry, Co., Ltd., Japan; degree of saponification 86-89 mol%.

Non-modified PVA: "Gosenol GM14" manufactured by The Nippon Synthetic Chemical Industry, Co., Ltd., Japan; degree of saponification 86-89 mol%.

Water-soluble oligomer A: 2-Acrylamide - 2-methylpropanesulfonic acid.

Water-soluble oligomer B: 20% aqueous solution of sodium methacrylate - 4-styrenesulfonate copolymer.

Anionic surface-active agent: Sodium lauryl sulfate.

Nonionic surface-active agent: "Pluronic L-64" manufactured by Asahi Denka Kogyo, K.K., Japan.

"Veoba 10": Vinyl ester of a saturated carboxylic acid branched at the α-position, available from Shell Japan, Ltd., Japan.

**Table 1**

| Note that the unit of the numerical values shown in Talbe 1 is "parts by weight". | | | | | | | | | |
|---|---|---|---|---|---|---|---|---|---|
| | | Example 1 | Example 2 | Example 3 | Example 4 | Example 5 | Example 6 | Comparative Example 1 | Comparative Example 2 |
| Components placed in reactor | Water | 110 | 118 | 85 | 110 | 94 | 160 | 130 | 160 |
| | 20% aqueous solution of sulfonic acid-modified PVA | 25 | 15 | 75 | 25 | 25 | | | |
| | 20% aqueous solution of carboxyl-modified PVA | | | | | | 25 | | |
| | 20% aqueous solution of non-modified PVA | | | | | | | | 25 |
| | Water-soluble oligomer A | 4 | 6 | | 4 | | 4 | 5 | 4 |
| | Water-soluble oligomer B | | | | | 20 | | | |
| | Anonic surface-active agent | | | | | | | 2 | |
| | Nonionic surface-active agent | | | | | | | 2 | |
| | 0.2% aqueous solution of iron sulfate | 2 | 2 | 2 | 2 | 2 | 2 | 2 | 2 |
| Monomer Composition | Metyl methacrylate | 50 | 50 | 50 | 40 | 50 | 50 | 50 | 50 |
| | Butyl acrylate | 50 | 50 | 50 | 40 | 50 | 50 | 50 | 50 |
| | Veoba 10 | | | | 20 | | | | |
| | Methacrylic acid | 3 | 3 | 3 | 3 | 3 | 3 | 3 | 3 |
| Catalyst Composition | Ammonium persulfate | 1 | 1 | 1 | 1 | 1 | 1 | 1 | 1 |
| | Water | 10 | 10 | 10 | 10 | 10 | 10 | 10 | 10 |
| (PVA/vinyl monomer composition) × 100 | | 4.9 | 2.9 | 14.6 | 4.9 | 4.9 | 4.9 | 0.0 | 4.9 |

| | | | | | | | | | |
|---|---|---|---|---|---|---|---|---|---|
| Sulfonic acid-modified PVA: "Goselan L-3266' manufactured by The Nippon Synthetic Chemical Industry, Co., Ltd., Japan; degree of saponification 86-89 mol%. Carboxyl-modified PVA: "Gosenal T-330' manufactured by The Nippon Synthetic Chemical Industry, Co., Ltd., Japan; degree of saponification 86-89 mol%. Non-modified PVA: "Gosenol GM14" manufactured by The Nippon Synthetic Chemical Industry, Co., Ltd., Japan; degree of saponification 86-89 mol%. Water-soluble oligomer A: 2-Acrylamide - 2-methylpropanesulfonic acid. Water-soluble oligomer B: 20% aqueous solution of sodium methacrylate - 4-styrenesulfonate copolymer. Anionic surface-active agent: Sodium lauryl sulfate. Nonionic surface-active agent: "Pluronic L-64' manufactured by Asahi Denka Kogyo, K.K., Japan. "Veoba 10": Vinyl ester of a saturated carboxylic acid branched at the ?-position, available from Shell Japan, Ltd., Japan. | | | | | | | | | |

**Table 2**

| | Example 1 | Example 2 | Example 3 | Example 4 | Example 5 | Example 6 | Comparative Example 1 | Comparative Example 2 |
|---|---|---|---|---|---|---|---|---|
| Re-dispersibility | ○ | ○ | ○ | ○ | ○ | ○ | × | ○ |
| Miscibility with ultra rapid hardening cement | ○ | ○ | ○ | ○ | ○ | ○ | ○ | × |

The results shown in Table 2 clearly show the following: surface-active agents were used as the emulsifying agent in Comparative Example 1, so that the emulsion powder obtained was excellent in miscibility with ultra rapid hardening cement; however, since anion-modified polyvinyl alcohol was not used at all, the re-dispersibility of the emulsion powder was poor. Further, in Comparative Example 2, polyvinyl alcohol was used as the emulsifying agent, so that the emulsion powder obtained showed excellent re-dispersibility; however, the polyvinyl alcohol used was non-modified one, so that the emulsion powder was poor in miscibility with ultra rapid hardening cement.

On the contrary, all of the re-dispersible emulsion powder of Examples 1 to 6 according to the present invention were found to be excellent in both re-dispersibility and miscibility with ultra rapid hardening cement.

## Claims

1. Re-dispersible emulsion powder comprising vinyl copolymer particles having anion-modified polyvinyl alcohol selected from sulfonic acid-modified polyvinyl alcohol, carboxylic acid-modified polyvinyl alcohol, and mixtures thereof adsorbed on the surface thereof,
*wherein a crosslinkable, water-redispersible powder composition containing*
*a) from 30 to 95 parts by weight of a water-insoluble, film-forming polymerisate of one or more radically polymerizable, ethylenically unsaturated monomers,*
*b) from 5 to 70 parts by weight of a water-soluble polymerisate, wherein at least one of the polymer components a) and b) contains one or more comonomer units having reactive groups which can form a chemical, nonionic bond with one another or with crosslinkers, and the parts by weight of a) and b) add up to 100 parts by weight, and*
*c) from 0.01 to 5% by weight, based on the total weight of a) and b), of at least one phase transfer catalyst,*
*is excluded.*

2. Re-dispersible emulsion powder according to claim 1, which is obtained by emulsion-polymerizing vinyl monomer composition in an aqueous medium in the presence of anion-modfied polyvinyl alcohol, and subjecting the resulting aqueous emulsion to drying.

3. Re-dispersible emulsion powder according to claim 1 or 2, wherein the anion-modified polyvinyl alcohol is used in an amount of 2 to 20% by weight of the whole quantity of the vinyl monomer composition.

4. A cement admixture comprising re-dispersible emulsion powder according to any of claims 1 to 3.

5. The cement admixture according to claim 4, which is an admixture for ultra rapid hardening cement.

6. A cement product produced by using re-dispersible emulsion powder according to any of claims 1 to 3.

7. A process for producing a cement product comprising:
mixing re-dispersible emulsion powder according to any of claims 1 to 3 with raw materials of cement,
mixing this mixture with an aqueous solvent, and
subjecting the resulting mixture to hardening.

8. A process for producing re-dispersible emulsion powder, comprising:
emulsion-polymerizing a vinyl monomer composition in an aqueous medium in the presence of anion-modifed polyvinyl alcohol selected from sulfonic acid-modified polyvinyl alcohol, carboxylic acid-modified polyvinyl alcohol, and
mixtures thereof, and
subjecting the resulting aqueous emulsion to drying,
*wherein a crosslinkable, water-redispersible powder composition containing*
*a) from 30 to 95 parts by weight of a water-insoluble, film-forming polymerisate of one or more radically polymerizable, ethylenically unsaturated monomers,*
*b) from 5 to 70 parts by weight of a water-soluble polymerisate, wherein at least one of the polymer components a) and b) contains one or more comonomer units having reactive groups which can form a chemical, nonionic bond with one another or with crosslinkers, and the parts by weight of a) and b) add up to 100 parts by weight, and*
*c) from 0.01 to 5% by weight, based on the total weight of a) and b), of at least one phase transfer catalyst,*
*is excluded.*

9. The process for producing re-dispersible emulsion powder according to claim 8, wherein the anion-modified polyvinyl alcohol is used along with a water-soluble oligomer.

10. The process for producing re-dispersible emulsion powder according to claim 8 or 9, wherein the vinyl monomer is an acrylic monomer.

11. The process for producing re-dispersible emulsion powder according to any of claims 8 to 10, wherein the anion-modifed polyvinyl alcohol is used in an amount of 2 to 20 % by weight of the whole quantity of the vinyl monomer composition.

## Patentansprüche

1. Redispergierbares Emulsionspulver, enthaltend Vinylcopolymerteilchen mit auf deren Oberfläche adsorbierten anionenmodifiziertem Polyvinylalkohol, ausgewählt unter sulfonsäuremodifiziertem Polyvinylalkohol, carbonsäuremodifiziertem Polyvinylalkohol und Mischungen davon,
*wobei eine vernetzbare, in Wasser redispergierbare Pulverzusammensetzung enthaltend*
*a) 30 bis 95 Gewichtsteile eines in Wasser unlöslichen, filmbildenden Polymerisats aus einem oder mehreren radikalisch polymerisierbaren, ethylenisch ungesättigten Monomeren,*
*b) 5 bis 70 Gewichtsteile eines wasserlöslichen Polymerisats, wobei zumindest einer der Polymeranteile a) und b) ein oder mehrere Comonomereinheiten mit reaktiven Gruppen enthält, die miteinander oder mit Vernetzern eine chemische, nichtionische Bindung eingehen können, und sich die Gewichtsteile von a) und b) auf 100 Gewichtsteile aufaddieren, und*
*c) 0.01 bis 5 Gew.-%, bezogen auf das Gesamtgewicht von a) und b), mindestens eines Phasentransfer-Katalysators,*
*ausgenommen ist.*

2. Redispergierbares Emulsionspulver nach Anspruch 1, das durch Emulsionspolymerisation einer Vinylmonomerzusammensetzung in einem wässrigen Medium in Gegenwart von anionenmodifiziertem Polyvinylalkohol und Trocknen der erhaltenen wässrigen Emulsion erhältlich ist.

3. Redispergierbares Emulsionspulver nach Anspruch 1 oder 2, worin der anionenmodifizierte Polyvinylalkohol in einer Menge von 2 bis 20 Gew.-%, bezogen auf die Gesamtmenge der Vinylmonomerzusammensetzung, verwendet wird.

4. Betonzusatzmittel, enthaltend das redispergierbare Emulsionspulver nach einem der Ansprüche 1 bis 3.

5. Betonzusatzmittel nach Anspruch 4, bei dem es sich um ein Zusatzmittel für ultraschnell härtenden Zement handelt.

6. Zementprodukt, hergestellt durch Verwendung von redispergierbarem Emulsionspulver nach einem der Ansprüche 1 bis 3.

7. Verfahren zur Herstellung eines Zementprodukts, bei dem man:
redispergierbares Emulsionspulver nach einem der Ansprüche 1 bis 3 mit Zementrohstoffen vermischt,
diese Mischung mit einem wässrigen Lösungsmittel vermischt und
die erhaltene Mischung einer Härtung unterwirft.

8. Verfahren zur Herstellung von redispergierbarem Emulsionspulver, bei dem man:
eine Vinylmonomerzusammensetzung in einem wässrigen Medium in Gegenwart von anionenmodifiziertem Polyvinylalkohol, ausgewählt unter sulfonsäuremodifiziertem Polyvinylalkohol, carbonsäuremodifiziertem Polyvinylalkohol und Mischungen davon, emulsionspolymerisiert und die erhaltene wässrige Emulsion trocknet,
*wobei eine vernetzbare, in Wasser redispergierbare Pulverzusammensetzung enthaltend*
*a) 30 bis 95 Gewichtsteile eines in Wasser unlöslichen, filmbildenden Polymerisats aus einem oder mehreren radikalisch polymerisierbaren, ethylenisch ungesättigten Monomeren,*
*b) 5 bis 70 Gewichtsteile eines wasserlöslichen Polymerisats, wobei zumindest einer der Polymeranteile a) und b) ein oder mehrere Comonomereinheiten mit reaktiven Gruppen enthält, die miteinander oder mit Vernetzern eine chemische, nichtionische Bindung eingehen können, und sich die Gewichtsteile von a) und b) auf 100 Gewichtsteile aufaddieren, und*
*c) 0.01 bis 5 Gew.-%, bezogen auf das Gesamtgewicht von a) und b), mindestens eines Phasentransfer-Katalysators,*
*ausgenommen ist.*

9. Verfahren zur Herstellung von redispergierbarem Emulsionspulver nach Anspruch 8, bei dem man den anionenmodifizierten Polyvinylalkohol zusammen mit einem wasserlöslichen Oligomer verwendet.

10. Verfahren zur Herstellung von redispergierbarem Emulsionspulver nach Anspruch 8 oder 9, bei dem es sich bei dem Vinylmonomer um ein Acrylmonomer handelt.

11. Verfahren zur Herstellung von redispergierbarem Emulsionspulver nach einem der Ansprüche 8 bis 10, bei dem man den anionenmodifizierten Polyvinylalkohol in einer Menge von 2 bis 20 Gew.-%, bezogen auf die Gesamtmenge der Vinylmonomerzusammensetzung, verwendet.

## Revendications

1. Emulsion en poudre redispersable comprenant des particules de copolymère vinylique ayant un alcool polyvinylique modifié anioniquement, choisi parmi un alcool polyvinylique modifié par un acide sulfonique, un alcool polyvinylique modifié par un acide carboxylique et leurs mélanges adsorbés sur leur surface,
*dans laquelle une composition de poudre réticulable redispersable dans l'eau comprenant*
*a) de 30 à 95 parties en poids d'un polymère filmogène insoluble dans l'eau à base d'un ou de plusieurs monomères à insaturation éthylénique polymérisables par voie radicalaire,*
*b) de 5 à 70 parties en poids d'un polymère hydrosoluble, dans lequel au moins un des composants polymères a) et b) contient un ou plusieurs motifs comonomères ayant des groupes réactifs, qui peuvent former une liaison chimique non ionique les uns avec les autres ou avec des agents de réticulation, et les parties en poids de a) et b) totalisent de 100 parties, et*
*c) de 0,01 à 5% en poids, par rapport au poids total de a) et b), d'au moins un catalyseur de transfert de phase,*
*est exclue.*

2. Emulsion en poudre redispersable selon la revendication 1, qui est obtenue par polymérisation en émulsion d'une composition de monomère vinylique dans un milieu aqueux en présence d'un alcool polvinylique modifié anioniquement, et soumettant l'émulsion aqueuse résultante au séchage.

3. Emulsion en poudre redispersable selon la revendication 1 ou 2, où l'alcool polyvinylique modifié anioniquement est utilisé en une quantité de 2 à 20 % en poids par rapport à la quantité totale de la composition de monomère vinylique.

4. Mélange de ciment comprenant une émulsion en poudre redispersable selon l'une quelconque des revendications 1 à 3.

5. Mélange de ciment selon la revendication 4, qui est un mélange pour le durcissement ultra-rapide de ciment.

6. Produit de ciment obtenu par utilisation d'une émulsion en poudre redispersable selon l'une quelconque des revendications 1 à 3.

7. Procédé de production d'un produit de ciment comprenant:
- mélange de l'émulsion en poudre redispersable selon l'une quelconque des revendications 1 à 3 avec des matières premières de ciment,
- mélange de ce mélange avec un solvant aqueux, et
- soumettant du mélange résultant au durcissement.

8. Procédé de production d'une émulsion en poudre redispersable, comprenant:
- une composition d'un monomère vinylique polymérisant en émulsion dans un milieu aqueux en présence d'un alcool polyvinylique modifié anioniquement choisi parmi un alcool polyvinylique modifié par un acide sulfonique, un alcool polyvinylique modifié par un acide carboxylique, et leurs mélanges, et
- traitement de l'émulsion aqueuse résultante par séchage
*dans laquelle une composition de poudre réticulable redispersable dans l'eau comprenant*
a) *de 30 à 95 parties en poids d'un polymère filmogène insoluble dans l'eau à base d'un ou de plusieurs monomères à insaturation éthylénique polymérisables par voie radicalaire,*
*b) de 5 à 70 parties en poids d'un polymère hydrosoluble, dans lequel au moin un des composants polymères a) et b) contient un ou plusieurs motifs comonomères ayant des groupes réactifs, qui peuvent former une liaison chimique non ionique les uns avec les autres ou avec des agents de réticulation, et la somme des parties en poids de a) et b) totalisent de 100 parties, et*
*c) de 0,01 à* 5% *en poids, par rapport au poids total de a) et b), d'au moins un catalyseur de transfert de phase,*
*est exclue.*

9. Procédé de production d'une émulsion en poudre redispersable selon la revendication 8, où l'alcool polyvinylique modifié anioniquement est utilisé conjointement avec un oligomère hydrosoluble.

10. Procédé de production d'une émulsion en poudre redispersable selon la revendication 8 ou 9, où le monomère vinylique est un monomère acrylique.

11. Procédé de production d'une émulsion en poudre redispersable selon l'une quelconque des revendications 8 à 10, où l'alcool polyvinylique modifié anioniquement est utilisé en une quantité de 2 à 20 % en poids de la quantité totale de la composition de monomère vinylique.
